# EUROPEAN PATENT APPLICATION

(11) **EP 0 963 771 A1**
(43) Date of publication of application: **15.12.1999**
(21) Application number: 98110715.4
(22) Date of filing: 10.06.1998
(51) Int. Cl.: B01D 1/00, F25B 43/02

(54) **Oil separator**

(71) Applicant: Frigomec S.r.l., 37048 S. Pietro di Legnago (VR) (IT)
(72) Inventor: Vignoli, Giovanni, 37045 Legnago (VR) (IT)
(74) Representative: Bonini, Ercole

(57) **Abstract**

The invention realises an oil separator (1) for frigorific fluids which comprises a tubular body (2) closed at the extremity, inside which a filtering group (3) is present. Said filtering group is formed of a tubular envelope (30) in which a spongy mass (35) formed of a continuous wire (135) entangled in a casual and chaotic way, is located, in the interspace between said tubular envelope (30) and said tubular body (2) the frigorific fluid from which to separate the oil undergoes changes of speed in modulus and direction in order to separate the oil that it contains for different inertia in comparison with the gaseous particles.

## Description

The invention concerns a perfected oil separator, particularly suitable for being used in frigorific systems.

As it is known the frigorific systems are substantially formed of a condenser and of an evaporator connected in series with one another, inside which a frigorific fluid is made to flow. Said fluid is raised steam by a compressor whose delivery is connected with the condenser and whose intake is connected with the evaporator.

During the compression the frigorific fluid comes in contact with the oil which lubricates the compressor and moves away with it a certain quantity which should be previously separated and sent again in the sump of the compressor before the compressed frigorific fluid enters the condenser.

In order to do this an oil separator which is inserted in the circuit below the delivery pipeline of the compressor and over the condenser, is part of the frigorific system.

Some separators belonging to the known technique, which are present on the market, realise the separation of the oil from the frigorific fluid in which it is dispersed by centrifugal separation means in which the frigorific fluid mixed with oil is tangentially diverted. This causes the separation of the oil by centrifugation, which falls by force of gravity on the bottom of the separator where it is impounded and conveyed again towards the sump of the compressor.

In some separators belonging to the known technique, the separation of the oil from the frigorific fluid which contains it, takes place setting the frigorific fluid itself in helicoidal motion suitable for generating a vortex which also in this case favours the separation of the oil by centrifugal force.

In other embodiments belonging to the known technique the separation of the oil takes place obliging the frigorific fluid to pass through filtering nets which contrasting against the oil particles, make them to slow down till stopping them and make them fall by gravity force on the bottom of the separator.

The present invention realises a perfected oil separator, which in comparison with oil separators belonging to the known technique just mentioned, presents a higher filtering effect, capacity being equal, of the treated frigorific fluid.

Such improvement of the filtering effect is obtained using filtering elements of a greater effectiveness and, uniting with the stopping action of the oil particles by contrast against filtering elements, with a separating action dued to a hydrodynamic process which exploits the greater inertia of the oil particles in comparison with the gaseous particles of the frigorific liquid in which they are dispersed and that takes place when said fluid undergoes a slowing down and a sudden change of direction.

The said purposes are achieved with the realisation of an oil separator particularly suitable for being used for frigorific fluids, which, according to the main claim comprises:
- a tubular body closed at an extremity by an upper cap and closed also at the opposite extremity by a lower cap;
- a filtering group arranged inside said tubular body;
- an entrance way of said frigorific fluid to be separated from the oil, realised in the tubular body next to said upper cap and in correspondence with said filtering group;
- an exit way of said fluid separated from the oil realised in said upper cap and communicating with said filtering group and it is characterised in that said filtering group comprises a tubular envelope which presents an extremity fixed to said upper cap and communicating with said exit way and the opposite extremity supplied with an opening which communicates with an expansion chamber delimited by the lower cap and by the terminal zone of said tubular body connected with said lower cap, said tubular envelope locating inside a continuous wire entangled in a casual and chaotic way, suitable for realising a spongy mass which realises a filtering effect on said frigorific fluid which comes from said entrance way and which enters said filtering group passing through said opening of said tubular envelope present in correspondence with said expansion chamber after said frigorific fluid has passed through an acceleration chamber defined in between said tubular envelope and said tubular body.

Advantageously the frigorific fluid which enters the separator by the entrance way, undergoes a speed increase passing in the acceleration chamber and when arrives in the expansion chamber it slows down, releases the oil particles which, having a greater mass tend to stop by inertia and to fall by gravity on the bottom and therefore to be impounded by the lower cap. The separation of said oil particles is favoured also by the sudden change of direction which the flow of frigorific fluid undergoes when passes through the opening of the filtering element 3 present in the expansion chamber in order to arrive to the exit way.

Besides, inside the filtering group the frigorific fluid undergoes a further slowing down of the oil particles dispersed in it, by knocking action against a spongy mass inside the tubular envelope of the filtering group, obtaining a further separation of the oil particles.

It is possible to comprehend therefore, that advantageously the oil separator of the invention realises a greater effect of separation of the oil from the frigorific liquid, in comparison with that one created by oil separators belonging to the known technique because it unites the mechanic separation dued to the spongy mass, with the hydrodynamic separation which exploits the separation principle by inertia of the oil particles, when these ones are slowed down and suddenly change direction.

The said purposes and the advantages will be better pointed out during the description of a preferred embodiment of the invention given as an example but not as a restriction and represented in the enclosed drawings where:

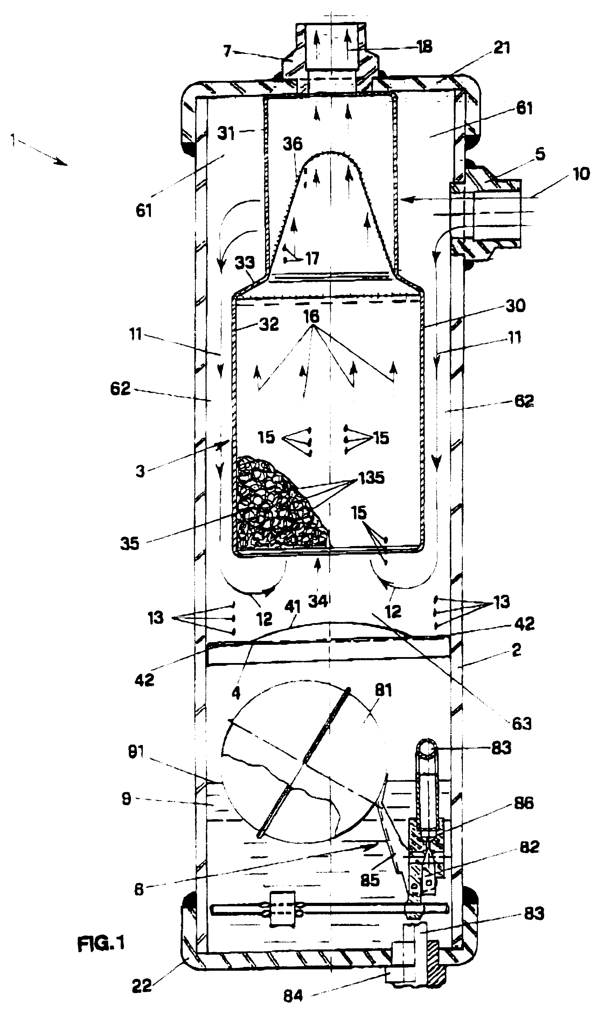

- fig. 1 shows the oil separator of the invention in a longitudinal section.

As it can be observed in fig. 1 the oil separator of the invention, indicated as a whole with 1 is applied to a frigorific system composed of a compressor, an evaporator and a condenser, not represented in figure.

It comprises:
- a tubular body 2 whose extremities are closed by an upper cap 21 and a lower cap 22;
- a filtering group, indicated as a whole with 3, arranged inside said tubular body 2 and fixed to the upper cap 21;
- a partition 4 fixed inside the inner walls of the tubular body 2 and in between said filtering group 3 and the lower cap 22;
- an entrance way 5 of the fluid to be separated from the oil coming from the delivery of the compressor which is arranged near the upper cap 21 and communicates with the inside of the tubular body 2 in correspondence with the filtering group 3 contained in it;
- an exit way 7 communicating with the delivery pipeline of the compressor, realised in the upper cap 21 and communicating with said filtering group 3;
- a discharging group of the impounded oil, indicated as a whole with 8, which comprehends a float 81 mechanically connected with a shutter 82 which opens or closes the way 86 of a conduct 83 which conveys the oil 9 accumulated on the lower cap 22 of the separator, inside the oil cup of the compressor, not represented in figure.

With regard to said filtering group, indicated as a whole with 3, it can be observed that it is formed of a tubular envelope 30 which comprehends a first zone 31 fixed to the upper cap 21 and communicating with the exit way 7 and a second zone 32, joined with one another by a branch collar with the shape of a truncated cone 33.

It can be observed also that said first zone 31 presents a lower transversal section in comparison with said second zone 32 in such a way that said first zone 31 defines with the side wall of the tubular body 2 a collecting chamber 61 having a cross section greater than the acceleration chamber 62 which said second zone 32 defines with the same side wall of the same tubular body 2.

When the flow of the fluid to be separated from the oil 10 coming from the delivery of the compressor passes through the entrance way 5, it enters the collecting chamber 61, descend according to the direction 11 along the acceleration chamber 62 in which its own speed increases. It enters therefore in the expansion chamber 63 defined in between the opening 34 realised on the bottom of the filtering element and the second zone 32 of said tubular envelope 30, where it undergoes a sudden slowing down because the cross section of said expansion chamber 63 is remarkably greater than the cross section of said acceleration chamber 62.

Such change of speed realises a first separation of the oil particles from the fluid for their different inertia and such separation is favoured also by the fact that the speed changes direction, as it is pointed out by the arrow 12 represented in fig. 1, when the frigorific fluid enters through the opening 34 in the filtering group 3.

Because of such changing of speed in modulus and direction, the separation of the first drops 13 of lubricating oil which comes down by gravity could be obtained.

A spongy mass, indicated as a whole with 30, which is formed of a continuous wire 135, entangled in a casual and chaotic way, is contained in the filtering group 3 and in particular inside the second zone 32 which forms its tubular envelope 35.

Said filtering mass is realised with a continuous wire in order to prevent the separation of possible microparticles which in case they are put into circulation, they could cause damages to the system.

The continuous wire makes an effecting action of separation from the oil because it constrains the fluid which passes through it to undergo continuous changes of direction and continuous knocks against it, causing a progressive slowing down of the oil particles till stopping them and making them fall by gravity.

During such phase, the drops 15 which, together with the oil drops 13, previously separated, fall by gravity, separate from the frigorific fluid.

The fluid this way, in practice, separated from the oil continues upwards according to the direction 16 where, before exiting through the exit way 7, it finds the security filter 36 formed of a net arranged in the first zone 31 of the tubular envelope 30, having the purpose of blocking the possible oil still present in the flow which separates in form of drops 17 which fall down.

The oil drops 13, 15 and 17 which are separated from the fluid find during their falling down the convex conveying surface belonging to the partition 4 which conveys them towards the peripheral edge arranged next to the inner wall of the tubular element 2. Along the peripheral edge holes 42 which permit the descending of the oil by gravity and which make it to collect in correspondence with the lower cap 22 in order to form the oil layer 9, are present.

The fluid so separated from the oil continues, according to the direction 18, through the exit way 7 and the oil layer remains on the lower cap 22.

It is possible therefore to comprehend that the oil separator performs its function using three actions which take place in sequence.

A first action which the separator performs on the fluid to be separated from the oil consists in, as we have seen, in the first separation of the oil from the fluid which happens with the creation of the drops 13 dued to the sudden change of direction and of modulus which the speed of the fluid undergoes, in the passing from the acceleration chamber 62 to the expansion chamber 63, before entering the filtering group 3.

A second action is performed by the spongy mass 35 whose volume is opportunely determined in order to obtain the maximum efficiency result in the separation of the oil from the gas. The separation is optimal in comparison with other systems belonging to the known technique, because the mixing gas - oil is obliged to undergo continuous changes of direction when it finds the continuous wire 135 shaped and wound which forms the spongy mass 35 itself. Because of their inertia, the oil particles don't succeed in following the flow of the fluid which passes zigzagging, following the way of the wire which forms the filtering mass and therefore they linearly pass continuously knocking against the wire which form the filtering mass itself. The oil particles, therefore, slow down, unite with one another and increase their volume till becoming drops 15 which collect in correspondence with the lower cap 22.

Finally a third action is performed by the security filter 36 which, as it can be observed, preferably has a conical shape with a jointed vertex and performs the function of last filter in order to guarantee with the separation of the further drops 17 still present, in order that the flow 18 which exits from the filtering group and which is sent to the evaporator of the system, could be absolutely without oil.

The presence of such security filter 36 permits also the stopping of impurities which could have eventually escaped the blocking of the preceding filterings.

It can be observed that in correspondence with the lower cap 22 the device of drainage of the oil, indicated as a whole with 8, which is formed of a float 81 immersed in the volume of oil 9 to be drained. Said float 81, by a connecting rod 85, controls a shutter 82 which cooperates with the way 86 of a draining pipeline 83, which comes out from the separator by a manifold 84 which conveys the oil 9 again in the cup of the compressor.

Indeed, when the level 91 of the oil 9 is over the prefixed level, the lifting of the float 81 causes the shifting of the shutter 82 which opens the way 86 of the pipeline 83. The existing pressure inside the separator pushes the oil 9 through the pipeline 83, which conveys it again in the cup of the oil of the compressor. The drainage of the oil continues till the level 91 of the oil 9 reaches such a height in order to restore the float 81 in such a position to close again the mouth 86 of the pipeline 83.

According to what has been said, it is possible to comprehend that the separator of the invention achieves all the purposes and the advantages previously mentioned.

The separator of the invention could present different embodiments according to the kind of use for which it has been planned, the capacity of the fluid to be treated and also depending from the mechanic systems which permit its fixing to every supporting device.

Besides, during the executive phase, also the shape of the draining group of the oil and the shape of the filtering group on the whole, could be changed.

Besides this, the spongy mass which realises the filtering effect should present any density and could therefore be realised with a continuous wire having any diameter.

The security filter could have any shape and could be supplied with holes of dimensions opportune for the use for which it has been planned.

It is clear that further not quoted, but however based on the same idea of solution described, variants are all to be considered protected by the present invention.

## Claims

1. Oil separator (1) for frigorific fluids comprising:
- a tubular body (2) closed at one extremity by an upper cap (21) and closed also at the opposite extremity by a lower cap (22);
- a filtering group (3) arranged inside said tubular body (2);
- an entrance way (5) of said frigorific fluid (10) to be separated from the oil, realised in the tubular body (2) near said upper cap (21) and in correspondence with said filtering group (3);
- an exit way (7) of said fluid separated from the oil (18) realised in said upper cap (21) and communicating with said filtering group (3), **characterised in that** said filtering group (3) comprises a tubular envelope (30) which presents an extremity fixed to said upper cap (21) and communicating with said exit way (7) and the opposite extremity supplied with an opening (34) which communicates with an expansion chamber (63) delimited by the lower cap (22) and by the terminal zone of said tubular body (2) connected with said lower cap (22), said tubular envelope (30) receiving inside it a continuous wire, entangled in a casual and chaotic way, suitable for realising a spongy mass (35) which realises a filtering effect on said frigorific fluid which comes from said entrance way (5) and which enters said filtering group (3) passing through said opening (34) of said tubular envelope (30) present in correspondence with said expansion chamber (63), after said frigorific fluid (10) has passed through an acceleration chamber (62) delimited in between said tubular envelope (30) and said tubular body (2).

2. Oil separator (1) according to the claim 1) **characterised in that** said tubular envelope (30) is formed of:
- a first tubular zone (31) fixed to said upper cap (21) and delimiting with said tubular body (2) a collecting chamber (61) communicating with said entrance way (5);
- a second tubular zone (32) arranged after said first tubular zone (31) and delimiting with said tubular body (2) an accelerator chamber (62) communicating with said collecting chamber (61), said second tubular zone (32) receiving said spongy mass (35) and finishing with said opening (34) communicating with said expansion chamber (63), being the cross section of said acceleration chamber (62) lower than the cross section of said collecting chamber (61), being the cross section of said second tubular zone (31) upper than the cross section of said first tubular zone (31).

3. Oil separator (1) according to the claim 2) **characterised in that** said first tubular zone (31) and said second tubular zone (32) are connected with one another by a connecting collar (33) with the shape of a truncated cone.

4. Oil separator (1) according to the claim 2) **characterised in that** said first tubular zone (31) receives a filtering net (36) which is put in between said second tubular zone (32) and said exit way (7).

5. Oil separator (1) according to the claim 1) **characterised in that** inside said expansion chamber (63) a partition (4) is put in between said opening (34) of said tubular envelope (30) and said lower cap (22), being said partition (4) formed of a disk - shaped element, centrally supplied with a conveying surface (41) and in correspondence with the periphery of a plurality of holes (42) suitable for permitting the fall by gravity of said oil drops (13, 15, 17) which are separated by said frigorific fluid (10).

6. Oil separator (1) according to the claim 1) **characterised in that** said draining group (8) comprises a float (81) mechanically connected with a shutter (82) which cooperates with the way (86) of a pipeline (83) arranged protruding from said lower cap (22) of said separator by a connecting manifold (84) and suitable for conveying outside the oil (9) collected by gravity on the lower cap (22) itself.

7. Oil separator (1) according to the claim 5) **characterised in that** said conveying surface (41) presents a convex outline.
